# EUROPEAN PATENT APPLICATION

(11) **EP 1 239 321 A2**
(43) Date of publication of application: **11.09.2002**
(21) Application number: 02251458.2
(22) Date of filing: 01.03.2002
(51) Int. Cl.: G02F 1/1335, G02F 1/13357, H04N 9/31

(54) **Fluorescent screen illuminator**

(30) Priority: 06.03.2001 GB 0105439
(71) Applicant: Stephens, Noel, Badminton, South Gloucestershire GL9 1BD (GB); Bishton, Stephen Leslie, Poole, Dorset BH15 4JX (GB)
(72) Inventor: Stephens, Noel, Badminton, South Gloucestershire GL9 1BD (GB); Bishton, Stephen Leslie, Poole, Dorset BH15 4JX (GB)

(57) **Abstract**

An LCD imaging device, adapted as a visual display projector, is illuminated by a planar array of light emitting diodes (12) whose wavelength excites a phosphor layer disposed in close proximity with the LCD. A respective miniature lens (13) collimates light emitted from each chip in a forward direction, which collectively act to produce a uniform light field having rays confined within a prescribed angular range. An LCD imaging device (14), placed in the light field, spatially modulates the light field before its rays strike the phosphor layer, which fluoresces in response to the light.

## Description

This patent describes an invention for a fluorescent phosphor screen illuminator which is used, in particular, in conjunction with a liquid crystal display device (LCD) to form a visual display device.

LCD devices per se are used extensively in many visual display applications such as video cameras, digital cameras, lap-top computers and projectors.

LCD devices are known to suffer from having a restricted viewing range. This is associated with the birefringence of the liquid crystal layer. The birefringence of liquid crystals is controlled by an applied electric field which in turn is produces visual contrast when viewed between polarisers. Unfortunately, birefringence of liquid crystals is also a function of viewing angle or the obliquity of light rays passing through them, hence restricting the effective viewing angle of the LCD device. This drawback becomes particularly troublesome in head-up display projector systems.

It is an objective of this invention to overcome this disadvantage.

Current practices in head-up display technology use collimated light from a halogen source to illuminate an LCD imaging device. This light source is heavy, bulky and generates excessive heat.

It is an objective of the present invention is to provide a compact, light weight, "cold" illumination source for illuminating imaging LCD devices used in head-up display projectors.

In the current practice (prior art), collimated light, passing through the LCD imaging device, is confined within a restricted angular range. This imposes a contrast pattern on the light according to the image displayed. In order that the image can be captured by a high numerical aperture viewing lens, light is scattered, when it has passed through the LCD. This is optically inefficient.

It is also an objective of the present invention to provide an efficient illumination means for use with LCD display projectors.

The illumination source according to this invention is an array of typically blue light emitting diode chips supported on a support member. Light is emitted from each chip in a forward direction and is collimated by a miniature lens. Each emitting chip has its own lens, and so there is a corresponding array of lens elements each collimating the light outputs of each emitting chip all substantially in the same direction.

The rays of the collimated blue light output field, emerging from the lens array, are confined within a prescribed angular range.

An LCD imaging device is placed in the light field at a location separated from the lens array by a small amount in order to achieve uniform illumination.

Rays in the uniform blue light field pass through the LCD in a direction substantially normally to its plane. A light contrast pattern (spatial modulation) is imposed on the light field, by the action of the LCD, thereby imposing an image on the light field.

Immediately the spatially modulated light field emerges from the LCD, it strikes a phosphor screen, which fluoresces in response to the blue light.

According to the present invention there is provided an LCD illuminator comprising a planar array of light emitting diode chips, 12, having an excitation wavelength, and a corresponding array of light collimators, 13, which together act to produce a uniform collimated light field, characterised in that the rays of the light field pass through a spatial light modulator, 14, in a direction substantially normally to its plane before emerging to impinge on a phosphor screen, 19, which fluoresces in response to the excitation wavelength of the light radiation.

The invention is now described in detail with reference to the following figures.

Figures 1, 2 and 3 show different detail of an LCD illuminator according to the prior art.

Figures 4, 5 and 6 show different detail of an LCD illuminator according to the preferred embodiment of the present invention.

Figure 7 shows schematically an embodiment for combining light from different colour phosphor screens.

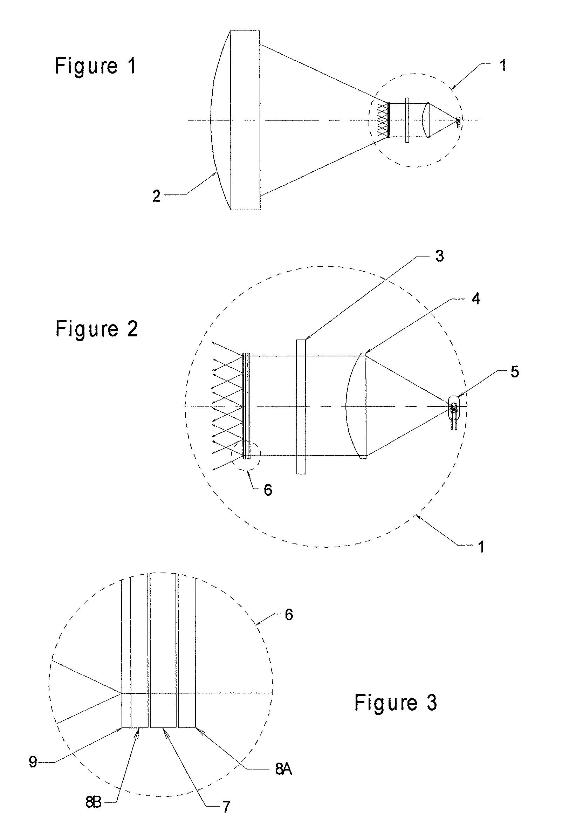

Figures 1 and 2 show the general arrangement of an LCD imaging projector according to the prior art. A condenser lens, 4, which also acts to collimate the output of a tungsten halogen lamp, 5, ensures light from the lamp is confined within a prescribed angular range before passing through an LCD, 7, imaging device. It is also necessary to filter out damaging infrared radiation prior to entering the LCD usind a heat filter 3. After passing the LCD device, the light is diffused by a light scattering screen, 9, (figure 3) so that it fills the aperture of a viewing lens 2.

Light is confined within a prescribed range, by lens 4, in order to minimise undesirable contrast variations across the image field when viewed through lens 2. This range is typically +/- 3 degrees.

Figure 3 details the layers in contact with the LCD imaging device including the light scattering screen, 9. The LCD device, 7, is sandwiched between two polarisers, 8A and 8B.

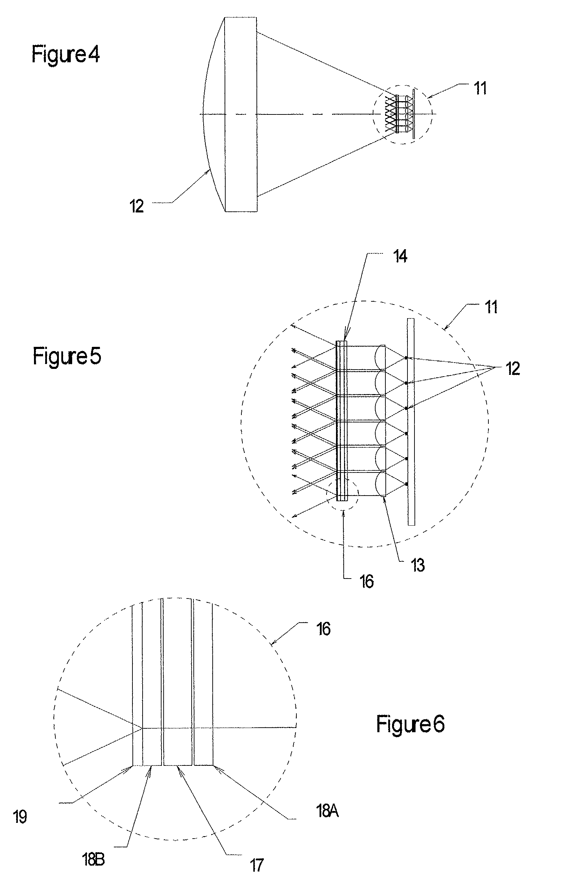

Features, which distinguish the present invention from the prior art, are illustrated with reference to figures 4, 5 and 6.

Figure 4 shows an LCD illuminator unit, 11, projected for viewing through a lens 12.

Figure 5 shows the LCD illuminator, 11, in more detail. Figure 6 shows the circled region, 16, in more detail. An LCD display layer, 14, is illuminated by a planar array of light emitting diodes (I.e.d's), 12, (supported on a support substrate) which emit at a wavelength suitable for exciting a fluorescent screen, 19, positioned to receive light after passing the LCD, 17. The colour of the output radiation is typically blue.
Before light from the l.e.d's passes through the LCD, 17, it is collimated by a planar array of light collimators, 13, and polarised by polariser 18A.

In the preferred embodiment of the invention, the collimators are conveniently an array of plastic moulded lenses, but can be any suitable light collimating devices including reflectors. The lens array is pitched the same as the l.e.d's so that each lens in the array collimates light from a particular l.e.d. in the emitter array, as indicated in figure 5.

Each lens element in the array, 13, is designed to have dimensions and focal lengths in relation to the l.e.d. emitting region, suitable for confining the angular spread of the collimated light within prescribed limits. The angular spread of collimated light according to the present invention may be larger than that of the prior art because any loss in contrast, by this mechanism, is spread across the entire image field by virtue of the collimator lens array.

The angular spread of collimated light according to the present invention is in excess of that of the prior art and can be +/- 7 degrees. This enables light to be collected more efficiently using l.e.d and lens arrays.

In the present invention, a phosphor layer, 19, is provided in close proximity with the LCD layer, such that it is excited by light after it has passed through the LCD layer and an analysing polariser, 18B.

The chemistry of the phosphor is designed to produce maximum visual brightness using the excitation wavelength of the l.e.d's. Techniques, known in the art of fluorescence, for improving visual efficiency may be effectively applied in this invention. For example it is known in the art that fluorescence persists after cessation of the exciting wavelength. This enables pulse operation of the I.e.d's to be employed with advantage.

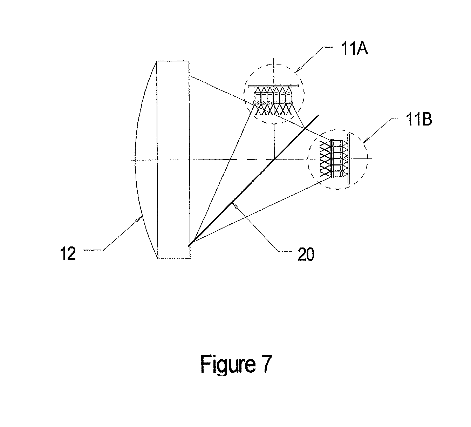

Figure 7 shows schematically an embodiment in which light from different phosphor screens are combined into a single unified image when viewed through the viewing lens. The different phosphors fluoresce with different colours. Each LCD imaging unit, 11A and 11 B, is dedicated to handling a given colour or pseudo-colour component of the image, so that when combined, a full colour image is produced. Figure 7 shows only two LCD imaging units, 11A and 11 B, for clarity, with their respective emitted light combined by beam combiner 20.

More typically light from three imaging units, having respectively three phosphor screens fluorescing in three primary colours, is combined. The chemistry of the respective colour fluorescing phosphors, known in the art, is tailored to suit the emission wavelength of the illuminating light emitting diodes.

Lights from different phosphor screens are combined with high efficiency using dichroic beam combiners known in the art.

## Claims

1. According to the present invention there is provided an LCD illuminator comprising a planar array of light emitting diode (l.e.d.) chips (12) having an excitation wavelength, and a corresponding array of light collimators (13) which together act to produce a uniform collimated light field, **characterised in that** the rays of the light field pass through a spatial light modulator (14) in a direction substantially normal to its plane, before emerging to impinge on a phosphor screen (19) which fluoresces in response to the excitation wavelength.

2. An LCD illuminator according to claim 1 in which the array of l.e.d. chips are supported on a substrate positioned behind a similarly pitched array of collimating devices.

3. An LCD illuminator according to claim 2 in which the array of collimating devices comprise array of plastic moulded lenses (13).

4. An LCD illuminator according to claim 2 in which the array of collimating devices comprise array of reflectors.

5. An LCD illuminator according to any one of claims 1, 2, 3 or 4 in which the angular spread of the collimated light is between +/- 3 and +/- 7 degrees.

6. An LCD illuminator according to any one of the previous claims in which the chemistry of the phosphor is designed to produce maximum visual brightness using a given excitation wavelength.

7. An LCD illuminator according to any one of the previous claims in which light from different phosphor screens are combined into a single unified image, the different phosphors fluorescing with different colours to produce a full coloured image.
